# EUROPEAN PATENT SPECIFICATION

(11) **EP 4 127 563 B1**
(45) Date of publication and mention of the grant of the patent: **30.10.2024**
(21) Application number: 21712236.5
(22) Date of filing: 11.03.2021
(51) Int. Cl.: F23G 5/00, F23J 15/04, F23L 7/00

(54) **INCINERATION PROCESS FOR WASTE AND DEVICE THEREFORE**
ABFALLVERBRENNUNGSVERFAHREN UND VORRICHTUNG DAFÜR
PROCÉDÉ D'INCINÉRATION DE DÉCHETS ET DISPOSITIF ASSOCIÉ

(30) Priority: 03.04.2020 BE 202005221
(43) Date of publication of application: 08.02.2023
(73) Proprietor: Sioen Engineering and Management Services, Besloten Vennootschap, 1760 Roosdaal (BE)
(72) Inventor: SIOEN, Herman Maurits M., 1760 Roosdaal (BE)
(74) Representative: Jacobs, Tinneke Ivonne C
(86) International application number: PCT/IB2021/052034
(87) International publication number: WO 2021/198819

(56) References cited:
- EP-A1- 1 107 833
- EP-B1- 1 107 833
- US-A- 5 309 850
- US-A1- 2003 171 635
- US-A1- 2008 078 122
- US-A1- 2014 288 195

## Description

The present invention relates to an incineration process for waste, and a device for performing the incineration process.

In particular, the invention is intended for incinerating waste or other inflammable substances in a grate incinerator, which is by far the most commonly used method for domestic waste or equivalent waste. However, the invention can also be applied in drum incinerators or fluidised bed incinerators.

It is known that for processing general waste worldwide the most commonly used method that remains as the only feasible option is incineration with energy recovery.

Traditionally the waste is incinerated in a grate incinerator in a large enclosed chamber, the floor of which consists of a "grate". This grate which bears the burning waste moves the waste from the feed side up to the discharge side of the incineration residues, i.e. bottom ashes or slags.

The incineration air is partly blown through the grate into the incinerator and partly over the grate into or over the burning waste in the incinerator. Said incineration air may or may not be heated.

The incineration requires oxygen and this is supplied by air from the surroundings which chiefly consists of nitrogen (78 %) but also contains the necessary oxygen (21 %) and for the rest contains inert gases, carbon dioxide (CO₂) and water vapour (1 %).

The incineration gases mostly consist of nitrogen, already present in the incineration air, but otherwise, hardly participating in the incineration process, and further of carbon dioxide (CO₂), water vapour (H2O) and a residual amount of unused oxygen.

The incineration gases also contain a high number of components many of which are harmful for human health and the environment, such as acids (HCl, SO₂, HF, etc.), nitrogen oxides (NOₓ), carbon monoxide (CO) and unburned hydrocarbons, dioxins and furans, heavy metals and solid particles.

These components are an inevitable complication of waste incineration but there are sufficient techniques to reduce the emissions of said components to a very low level. The emission reduction, i.e. the ratio of the removed quantity of a certain component to the quantity of said component in the untreated flue gases, amounts to 99% or even more in almost all cases. Only for NOₓ the emission reduction is less whereby 75% to 80% is already a very good result, which means that another 20% to 25% of the produced NOₓ is emitted.

In recent years, global warming has become an important social and political issue. This warming is caused mostly by the increasing concentration of CO₂ ("greenhouse gas") in the atmosphere, but also a number of other substances such as methane. This is the result of human activities such as traffic, heating of buildings, electricity generation, industry, and the like. The flue gases of waste incineration contain approximately 9 vol% CO₂ on average. The existing techniques to capture said CO₂ are cumbersome and expensive.

The energy released in waste incineration is recovered as much as possible, usually in the form of steam that is used to generate electricity in a classic Rankine steam cycle and/or for heating purposes. The aim is the biggest possible efficiency, i.e. to use as much energy in a useful way as possible, in other words to waste as little energy as possible. The biggest energy loss in waste incineration is the `flue loss', i.e. the energy leaving the flue in the flue gases.

The present invention relates to a new incineration process for waste and by extension other fuels whereby, compared with the current state of the art:
- None or hardly any CO₂ is emitted;
- More energy can be recovered;
- The formation of NOₓ is substantially lower;
- The amount of flue gases is many times less.

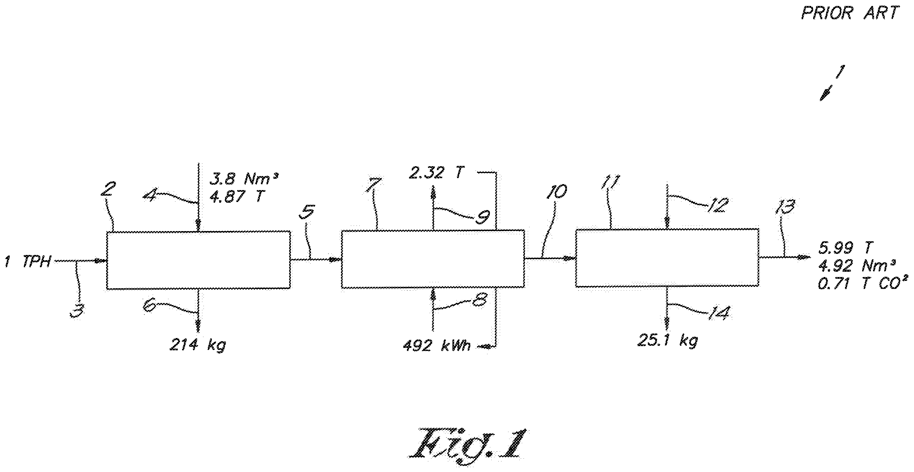

In the current state of the art the waste incineration in a grate incinerator goes through three main processes (see also Fig. 1):
1. An incineration process in which the waste is fed to the incinerator and is mixed and incinerated together with incineration air, resulting on the one hand in hot flue gases and on the other hand in incineration residues;
2. A cooling process in which the hot flue gases are cooled in a steam boiler and the energy released during the incineration is recovered;
3. A purification process in which the cooled flue gases are purified before they are discharged into the atmosphere.

However, the mass and energy balance of this sort of known waste incineration in a grate incinerator is unfavourable. Per tonne or per 1000 kg of waste, approximately 5 tonnes of air are needed and approximately 6 tonnes of flue gases are produced. This large quantity is the result of the fact that the incineration air consists of inert nitrogen for the most part, which does not participate or hardly participates in the incineration processes, but does have to be heated and cooled again. The whole installation must therefore be sized for a flow of gas which for the most parts consists of inert nitrogen ballast.

The nitrogen in the incineration air gives rise to the formation of NOₓ which, chiefly with high temperatures, is also called "thermal NOₓ". The fuel itself, i.e. the waste, also contains nitrogenous compounds which during incineration can result in NOₓ which is also called "fuel NOₓ".

According to most specialised literature "fuel NOₓ" is the dominant form in waste incineration, particularly with moderate temperatures. The typical NOₓ concentration of the flue gases at the exit of the incinerator amounts to 400 mg/Nm³ under reference circumstances, whereas the European directives lay down a maximum of 200 mg/Nm³ in the flue and even lower standards, to 100 mg or 70 mg, are imposed in the permit of many installations. To achieve said lower values, so-called de-NOₓ-installations are needed, which exist in two variants: at high temperature without catalyst (SNCR) or at lower temperature but then with catalyst (SCR).

The foregoing shows that a logical step would be to avoid the nitrogen in the incineration air by working with pure oxygen, which is an industrial gas that is applied on a large scale in, for example, the steel industry. Although this is theoretically possible, the calculations show that the temperature in the incinerator, even at a low incineration value of the waste, increases to very high values to more than 2000°C.

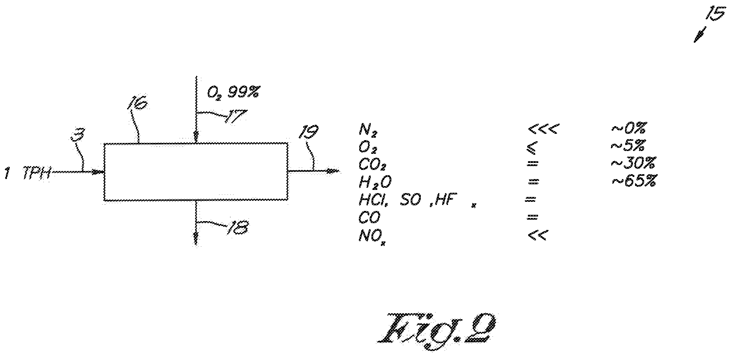

This is much too high for a grate incinerator. It would in any case result in the formation of melted incineration residues and clinkers. When pure oxygen is used the theoretical flue gases only consist of water vapour, CO₂ and a small percentage of pollutants as with classic waste incineration i.e. acids, NOₓ, CO, and particles (see also Figure 2).

To limit the temperature in the incinerator, a mixture of oxygen and an inert gas other than nitrogen can be used instead of pure oxygen.

An obvious option is flue gas recirculation, i.e. a part of the produced flue gas is led back to the incinerator together with the, in this case, pure oxygen. Flue gas recirculation or FGR is a known and regularly applied method, but certainly not always, in traditional waste incineration and has a favourable influence on the thermal efficiency of the installation. FGR would also limit NOₓ formation.

In the concept with pure oxygen, the flue gases contain a lot of water vapour as well as pollutants. They can be removed with classic techniques of flue gas purification and flue gas condensation. In the latter the flue gases are cooled to below their saturation temperature, typically 65°C. A lot of water is recovered in this way on the one hand, which still needs to be purified, but on the other hand a lot of heat is also recovered. This, however, concerns heat at low temperature, only suitable for heating buildings for example. EP 1 107 833 A1 discloses a waste incineration process having the features of the preamble of claim 1.

The purpose of the present invention is to provide a solution to the aforementioned and other disadvantages by providing in an incineration process, allowing the heat recovery to be increased, the CO2 emission to be prevented entirely or almost entirely and the amount of flue gas to be reduced by many factors.

To this end the present invention relates to a classic grate incinerator whereby the incineration air will be replaced by a mixture of pure oxygen and recirculated, purified and dewatered flue gas, more than half of which consists of CO₂.

The mass and energy balance of said incineration process according to the invention in a grate incinerator is far more favourable.

1 tonne of waste requires 0.63 tonnes of pure O₂. The flue gases at the exit amount to less than 0.8 tonne, i.e. less than 15% of what is released with the traditional state of the art and for 90% consist of CO₂. It has thus become very simple to capture and store said CO₂ ('Carbon Capture and Storage' of CCS) or to use it ('Carbon Capture and Utilisation' of CCU). However, CCS and CCU are existing concepts which demand a lot of energy and resources. In the present invention they become self-evident.

The energy balance shows that the steam cycle is considerably more efficient, in the example (in terms of figures) this is 7.5%, because the flue loss is less. Furthermore, the flue gas flow through the boiler is lower such that the steam boiler, the fans, pipes, etc. can be smaller as well, and therefore the investment cost is lower.

The pure oxygen required for this process is made on site with • Electrolysis During electrolysis, pure water is separated into oxygen gas and hydrogen gas. This known procedure consumes a huge amount of electrical energy, far more than the waste incineration installation produces. The first goal of electrolysis is making hydrogen gas, the oxygen then being a 'by-product'.

In the present invention electrolysis is used to generate the required oxygen for the incineration process.

The invention also relates to a device according to claim 9 for performing the incineration process. The device comprises an incinerator with a feed for the waste to be incinerated, a feed for a mixture of pure oxygen and recycled, purified and dewatered flue gas, a discharge for bottom ashes and a discharge for hot flue gases, and whereby the device also comprises an electrolysis device, with which the water that was recovered from the flue gas purification installation is separated into pure oxygen and pure hydrogen, whereby the pure oxygen is led to the incinerator after being mixed with recycled, purified and dewatered flue gases and introduced into the incinerator to maintain the incineration. The calculations show that sufficient water is recovered from the flue gases to produce the necessary oxygen. The water does have to be completely purified and demineralised. An installation of the desired size does not yet exist.

The discharge for hot flue gases in the device can be connected to the feed of a steam boiler in which the hot flue gases are cooled with water with formation of steam and are discharged as cooled flue gases, whereby the formed steam is converted into electric power in a Rankine cycle. In the present invention the flue gases of the waste incineration rich in CO₂ are combined with the hydrogen gas produced by electrolysis to make a useful chemical substance using existing technology. An example is the synthesis of methanol (CH₃OH). This is a known fuel but also a basic product for the chemical industry.

When the synthesis of methanol is combined with the waste incineration installation, interesting synergies are possible, because the synthesis consumes steam but also produces energy. Such methanol synthesis installations exist on a sufficiently large scale.

With the intention of better showing the characteristics of the invention, a few preferred embodiments of an incineration process according to the invention are described hereinafter by way of an example, without any limiting nature, with reference to the accompanying drawings, wherein:
Figure 1 schematically shows a flow diagram of a traditional incineration process in a grate incinerator;
figure 2 schematically shows a flow diagram of a hypothetical incineration process with pure oxygen;
figure 3 schematically shows a flow diagram of an incineration process in a grate incinerator;
figure 4 schematically shows a flow diagram of the incineration process with electrolysis of water;
figure 5 schematically shows a flow diagram according to the invention.

Figure 1 schematically shows a flow diagram 1 of a traditional incineration process in a grate incinerator 2 whereby the waste 3 is fed to the grate incinerator 2 and together with incineration air 4, i.e. ambient air is mixed and incinerated, resulting in, on the one hand, hot flue gases 5 and on the other hand, in incineration residues 6 such as bottom ashes. The hot flue gases 5 are cooled in a steam boiler 7 in which water 8 is converted into steam 9 and whereby a part of the energy is recovered that is released during the incineration. The cooled flue gases 10 are purified in a purification step 11 by means of chemicals 12, with the formation of purified flue gases 13 which are discharged into the atmosphere, and residues 14 of the flue gas purification. The figure specifies the obtained quantities starting from 1 tonne per hour (TPH) of waste 3 processing, and the supply of 4.87 tonnes ambient air 4, resulting in 214 kg bottom ashes 6, and 2.32 tonnes of steam 9 in the steam boiler 7, which recovers 492 kWh energy from the cooled flue gases 10. Said cooled flue gases 10 are purified with chemicals 12 whereby 25.1 kg residue 14 of the flue gas purification 11 is formed, and after which 5.99 tonnes of flue gas 13 are discharged into the atmosphere.

Figure 2 schematically shows a flow diagram 15 of a hypothetical but unfeasible incineration process of waste 3 in an incinerator 16, whereby the incineration air from the environment would be replaced by pure oxygen 17 (99% pure). The temperature of the incinerator 16 would hereby increase to an untenable temperature in excess of 2000 °C, resulting in a melted incinerator and incineration residues 18 and the theoretical flue gases 19 would only consist of water vapour, CO₂ and a small percentage of pollutants such as acids, NOx, CO and particles. The total flue gas flow would be much less, i.e. 1,500 Nm3 per tonne of waste, and the thermal efficiency would be better due to far less flue loss.

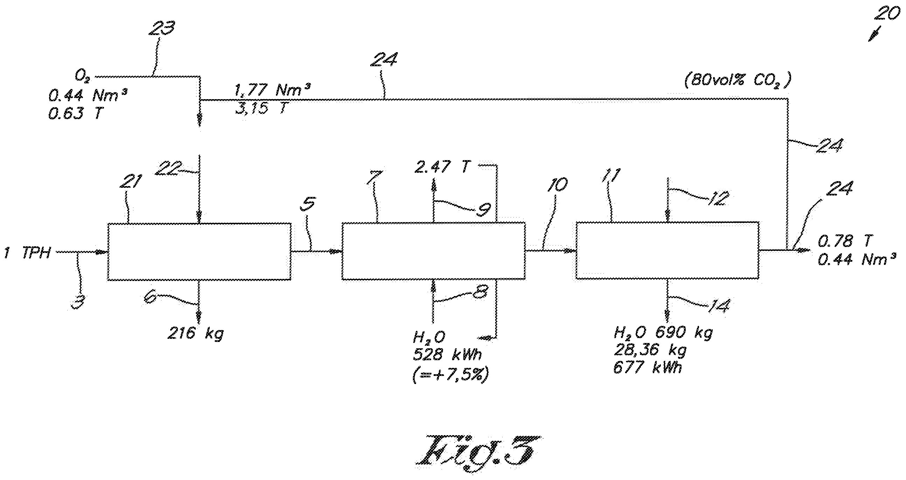

Figure 3 schematically shows a flow diagram 20 of an incineration process of waste 3 in a classic grate incinerator 21, whereby a mixture 22 of pure oxygen 23 and of recirculated, purified and dewatered flue gas 24 is added to the incinerator, more than half of which consists of CO₂. 1 tonne of waste requires 0.63 tonne of pure oxygen O₂ whereas the flue gases at the exit 24 amount to less than 0.8 tonne or less than 15% of the quantity of flue gases produced in a traditional incineration process with incineration air from the environment.

Furthermore, 90% of the flue gases consist of CO₂ which is better suited to capturing and storing or utilising said CO₂. The incineration process converts the waste 3 into hot flue gases 5 and bottom ashes 6, after which the hot flue gases are cooled in a steam boiler 7 in which water 8 is converted into steam 9. The cooled flue gases 10 are purified in a flue gas purification system 11 with condensing scrubber by adding chemicals 12, and with the formation of residues 14 of flue gases. The energy balance shows that the steam cycle is considerably more efficient (now 7.5 % more) and that the flue loss is less, such that the whole installation can be sized smaller.

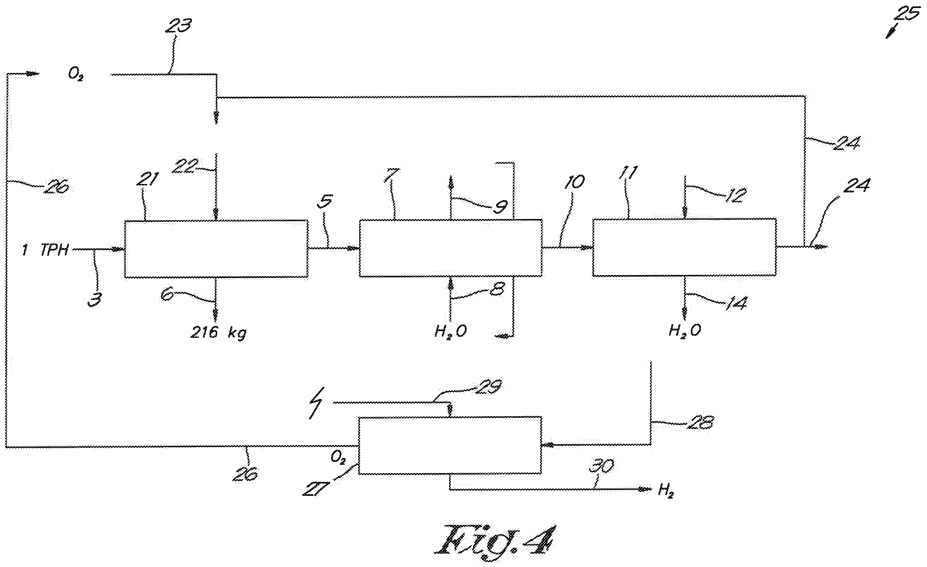

Figure 4 schematically shows a flow diagram 25 of a waste incineration process for an incinerator whereby a mixture of pure oxygen and recycled, purified and dewatered flue gas is supplied to the incinerator and whereby the pure oxygen, necessary for the incineration process, is produced locally in an electrolysis device, which separates water recovered from purifying the cooled flue gases into hydrogen (30) and oxygen (26).

Calculations show that sufficient water 28 is recovered from purifying the cooled flue gases 10 to produce the necessary oxygen, provided that the water is completely purified and demineralised. The electrolysis device 27 uses renewable energy 29 such as solar and/or wind energy to produce oxygen 26, whereby hydrogen 30 is also produced as a by-product, which can be sold, or in a second variant of the incineration process according to the invention can also be utilised on site.

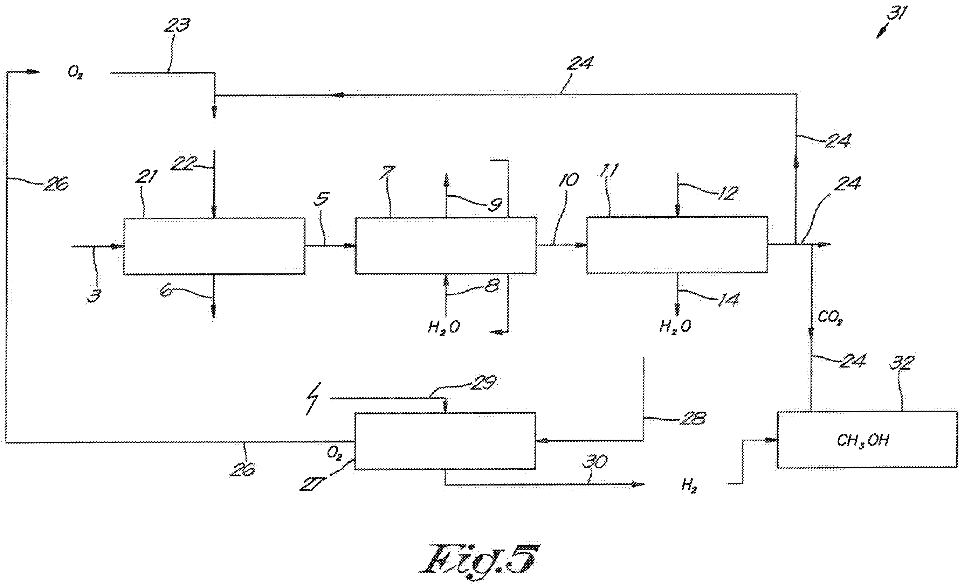

Figure 5 shows a flow diagram 31 of the incineration process according to the invention, whereby in this case the flue gases 24 of the waste incineration rich in CO₂, are partly combined with the hydrogen gas H₂ 30 that was produced via electrolysis of water 28 in an electrolysis device 29 and this in a methanol synthesis device 32, with formation of methanol CH₃OH, said substance itself being a known fuel but also a basic product usable for the chemical industry.

The operation of an incineration process 20 of waste 3 according to the invention in a classic grate incinerator 21, is very simple and as follows. The waste 3 is incinerated in an incinerator 21 to which a mixture of pure oxygen and recycled, purified and dewatered flue gas is supplied, whereby more than half of the supplied mixture consists of CO₂.

The incineration of the waste 3 leads to the formation of hot flue gases 5, and bottom ashes 6 which remain at the bottom of the incinerator. The hot flue gases 5 are cooled in a steam boiler in which water 8 is heated to steam 9 and whereby a part of the energy supplied to the flue gases is recovered. The cooled flue gases 10 are fed to a flue gas purification installation 11 which by means of chemicals 12 and a condensing scrubber purifies the flue gases 10 to purified flue gas 24, after which said purified flue gas is partly discharged into the atmosphere, but is also partly recycled as purified and dewatered flue gas 24 which consists chiefly of CO₂ and is mixed with pure oxygen 23 (99%) and returned to the incinerator to allow incineration with oxygen in the incinerator at applicable temperatures.

In the incineration process according to the invention the pure oxygen 26 required for the incineration process is produced locally in an electrolysis device 27, which separates water 28 recovered from purifying the cooled flue gases 10 into hydrogen 30 and oxygen 26, using renewable energy 29 such as solar and/or wind energy, whereby the necessary pure oxygen 26 is supplied to the incineration process, and the formed hydrogen 30 can be sold as industrial gas, or utilised on site, by letting it react with a part of the purified and dewatered flue gas 24 in a local synthesis device where organic products are formed such as, in this case, methanol in a methanol synthesis device. The formed methanol can be used both as fuel or be utilised as raw material for the chemical industry.

It goes without saying that the reaction products from the hydrogen and the dewatered and purified flue gas 24 produced on site are not limited to methanol, but other reaction products are also possible, with or without the use of catalysts.

## Claims

1. Waste incineration process (20) for an incinerator (21) for incinerating waste (3), wherein **characterized in that** a mixture (22) of pure oxygen (23) and recycled, purified and dewatered flue gas (24) is supplied to the incinerator (21) **characterised in that** the pure oxygen (26), necessary for the incineration process, is produced locally in an electrolysis device (27) which separates water (28) recovered from purifying the cooled flue gases (10) into hydrogen (30) and oxygen (26), and the hydrogen (30) formed in the electrolysis device (27) is also utilised on site, by letting the formed hydrogen (30) react, with a part of the purified and dewatered flue gas (24) in a local synthesis device (32).

2. Waste incineration process according to claim 1, **characterised in that** more than half of the supplied mixture (22) of pure oxygen (23) and recycled flue gas (24) consists of CO₂.

3. Waste incineration process (20) according to claim 1, **characterised in that** the incineration process converts waste (3) into hot flue gases (5) which are cooled in a steam boiler (7) for the production of steam (9), from which electrical energy is generated by means of a Rankine cycle.

4. Waste incineration process (20) according to claim 3, **characterised in that** the cooled flue gases (10) are purified and dewatered in a flue gas purification system (11) with condensing scrubber by adding chemicals (12).

5. Waste incineration process (20) according to claim 4, **characterised in that** the cooled, purified and dewatered flue gases (24) are partly recycled to the incinerator (21).

6. Waste incineration process according to claim 1, **characterised in that** the electrolysis device (27) uses renewable energy (29) such as solar and/or wind energy, whereby the pure oxygen, necessary for the incineration process is supplied to the incinerator, and the formed hydrogen (30) is sold as industrial gas.

7. Waste incineration process according to any of the previous claims 7, **characterised in that** organic products are formed in the synthesis device (32).

8. Waste incineration process according to claim 7, **characterised in that** the formed organic product is methanol, whereby the formed methanol can be used both as fuel and as chemical raw material for the chemical industry.

9. Device for performing the waste incineration process described in claim 1, wherein the device comprises an incinerator (21) with a feed for the waste to be incinerated (3), a feed for a mixture (22) of pure oxygen (23) and recycled, purified and dewatered flue gas (24), and a discharge for bottom ashes (6) and a discharge for hot flue gases (5), and wherein the device also comprises an electrolysis device (27), configured to separate the water (28) that was recovered from the flue gas purification installation into pure oxygen (26) and pure hydrogen (30), whereby the pure oxygen (26) is led to the incinerator (21) after being mixed with recycled, purified and dewatered flue gases (24), to maintain the incineration, wherein the device also comprises a synthesis device (32) to which pure hydrogen (30) from the electrolysis device (27) is supplied, and recycled, purified and dewatered flue gases (24) react with the formation of reaction products.

10. Device according to claim 9, wherein the discharge for hot flue gases (5) is connected to a feed of a steam boiler (7) configured to cool the hot flue gases with water (8) with the formation of steam (9) and to discharge them as cooled flue gases (10), whereby the device is configured to convert the formed steam (9) into electric power in a Rankine cycle.

11. Device according to claim 10, wherein the discharge of cooled flue gases (10) is connected to the feed of a flue gas purification installation (11) with a condensing scrubber, in which chemicals (12) are added to the cooled flue gases (10) and the cooled flue gases are purified to become purified and dewatered flue gases (24) that are led to a discharge.

12. Device according to claim 11, wherein the discharge partly discharges the purified and dewatered flue gases (24) into the atmosphere, and partly recycles them by feeding this part back to the incinerator (21), and after admixture of pure oxygen (23), introducing it into the incinerator (21) to maintain the incineration in the incinerator.

13. Device according to any of the claims 9 to 12, wherein the synthesis device (32) is a methanol synthesis device that produces methanol.

## Patentansprüche

1. Verfahren zur Verbrennung von Abfällen (20) für einen Verbrennungsofen (21), der zur Verbrennung von Abfällen (3) bestimmt ist, wobei dem Verbrennungsofen (21) ein Gemisch (22) aus reinem Sauerstoff (23) und Rauchgasen (24) zugeführt wird, die recycelt, gereinigt und entwässert worden sind, **dadurch gekennzeichnet, dass** der für das Verbrennungsverfahren erforderliche reine Sauerstoff (26) lokal in einer Elektrolysevorrichtung (27) erzeugt wird, die Wasser (28), das aus der Reinigung der gekühlten Rauchgase (10) zurückgewonnen wurde, in Wasserstoff (30) und Sauerstoff (26) trennt, und dass der in der Elektrolysevorrichtung (27) gebildete Wasserstoff (30) ebenfalls vor Ort verwendet wird, indem man den erzielten Wasserstoff (30) mit einem Teil des Rauchgases (24), das gereinigt und entwässert wurde, in einer lokalen Synthesevorrichtung (32) reagieren lässt.

2. Verfahren zur Verbrennung von Abfällen nach Anspruch 1, **dadurch gekennzeichnet, dass** mehr als die Hälfte der zugeführten Mischung (22) aus reinem Sauerstoff (23) und recyceltem Rauchgas (24) aus CO₂ besteht.

3. Verfahren zur Verbrennung von Abfällen (20) nach Anspruch 1, **dadurch gekennzeichnet, dass** das Verbrennungsverfahren Abfälle (3) in heiße Rauchgase (5) umwandelt, die in einem Dampferzeuger (7) zur Erzeugung von Dampf (9) gekühlt werden, aus dem mittels eines binären Kreislaufs elektrische Energie erzeugt wird.

4. Verfahren zur Verbrennung von Abfällen (20) nach Anspruch 3, **dadurch gekennzeichnet, dass** die gekühlten Rauchgase (10) in einem Rauchgasreinigungssystem (11), das einen Kondensationswäscher umfasst, durch Zugabe von Chemikalien (12) gereinigt und entwässert werden.

5. Verfahren zur Verbrennung von Abfällen (20) nach Anspruch 4, **dadurch gekennzeichnet, dass** die gekühlten, gereinigten und entwässerten Rauchgase (24) teilweise in Richtung des Verbrennungsofens (21) recycelt werden.

6. Verfahren zur Verbrennung von Abfällen nach Anspruch 1, **dadurch gekennzeichnet, dass** die Elektrolyseeinrichtung (27) erneuerbare Energie (29) verwendet, wie z. B. Solar- und/oder Windenergie; wobei der reine Sauerstoff, der für das Verbrennungsverfahren benötigt wird, in die Verbrennungsanlage eingespeist wird, und der erzielte Wasserstoff (30) als Industriegas verkauft wird.

7. Verfahren zur Verbrennung von Abfällen nach einem der vorhergehenden Ansprüche, **dadurch gekennzeichnet, dass** in der Synthesevorrichtung (32) organische Produkte gebildet werden.

8. Verfahren zur Verbrennung von Abfällen nach Anspruch 7, **dadurch gekennzeichnet, dass** das erzielte organische Produkt Methanol ist; wobei das erzielte Methanol sowohl als Biomethanol als auch als chemischer Rohstoff für die chemische Industrie verwendet werden kann.

9. Vorrichtung zur Durchführung des in Anspruch 1 beschriebenen Verfahrens zur Verbrennung von Abfällen, wobei die Vorrichtung einen Verbrennungsofen (21), der eine Zufuhr für die zu verbrennen Abfälle (3), eine Zufuhr für ein Gemisch (22) aus reinem Sauerstoff (23) und Rauchgas (24), das recycelt, gereinigt und entwässert worden ist, sowie eine Ableitung für Restasche (6) und eine Ableitung für heiße Rauchgase (5) umfasst; und wobei die Vorrichtung auch eine Elektrolyseeinrichtung (27) umfasst, die zur Trennung von Wasser (28) ausgestaltet ist, das aus der Rauchgasreinigungsanlage zurückgewonnen wurde, in reinen Sauerstoff (26) und reinen Wasserstoff (30); wobei der reine Sauerstoff (26) nach Vermischung mit Rauchgasen (24), die zur Aufrechterhaltung der Verbrennung recycelt, gereinigt und entwässert worden sind, zu dem Verbrennungsofen (21) geführt wird, um die Verbrennung aufrechtzuerhalten; wobei die Vorrichtung auch eine Synthesevorrichtung (32) umfasst, der den aus der Elektrolyseeinrichtung (27) stammenden reinen Wasserstoff (30) zugeführt wird, und die recycelten, gereinigten und entwässerten Rauchgase (24) zur Herstellung von Reaktionsprodukten umgesetzt werden.

10. Vorrichtung nach Anspruch 9, wobei die Ableitung für die heißen Rauchgase (5) mit einer Zufuhr eines Dampferzeugers (7) verbunden ist, der so ausgestaltet ist, dass er die heißen Rauchgase mit Wasser (8) kühlt, wodurch Dampf (9) entsteht, und sie als Rauchgase (10), die gekühlt wurden, abgibt; wobei die Vorrichtung so ausgestaltet ist, dass sie den erzielten Dampf in einem binären Zyklus in elektrische Energie umwandelt.

11. Vorrichtung nach Anspruch 10, wobei die Ableitung für gekühlte Rauchgase (10) mit der Zufuhr einer Rauchgasreinigungsanlage (11) verbunden ist, die einen Kondensationswäscher umfasst, in dem Chemikalien (12) den gekühlten Rauchgasen (11) zugesetzt werden und gekühlte Rauchgase gereinigt werden, um Rauchgase (24) zu werden, die gereinigt und entwässert worden sind, die einer Ableitung zugeführt werden.

12. Vorrichtung nach Anspruch 11, wobei die Ableitung die Rauchgase (24), die gereinigt und entwässert wurden, teilweise in die Atmosphäre abführt und teilweise recycelt, indem dieser Teil zurück dem Verbrennungsofen (21) zugeführt und nach Beimischung von reinem Sauerstoff (23) in den Verbrennungsofen (21) eingebracht wird, um die Verbrennung in dem Verbrennungsofen aufrechtzuerhalten.

13. Vorrichtung nach einem der Ansprüche 9 bis 12, wobei die Synthesevorrichtung (32) eine Methanolsynthesevorrichtung ist, die Methanol herstellt.

## Revendications

1. Procédé d'incinération des déchets (20) pour un incinérateur (21) destiné à l'incinération de déchets (3), dans lequel on alimente l'incinérateur (21) avec un mélange (22) d'oxygène pur (23) et de gaz de fumée (24) qui ont été recyclés, purifiés et déshydratés, **caractérisé en ce que** l'oxygène pur (26), nécessaire pour le procédé d'incinération, est produit localement dans un dispositif d'électrolyse (27) qui sépare l'eau (28), qui a été récupérée de la purification des gaz de fumée refroidis (10), en hydrogène (30) et en oxygène (26), et **en ce que** l'hydrogène (30) qui se forme dans le dispositif d'électrolyse (27) est également utilisé sur site, en laissant l'hydrogène obtenu (30) réagir avec une partie du gaz de fumée (24), qui a été purifié et déshydraté, dans un dispositif de synthèse local (32).

2. Procédé d'incinération des déchets selon la revendication 1, **caractérisé en ce que** plus de la moitié du mélange alimenté (22) d'oxygène pur (23) et de gaz de fumée (24) qui ont été recyclés est constituée de CO₂.

3. Procédé d'incinération des déchets (20) selon la revendication 1, **caractérisé en ce que** le procédé d'incinération transforme des déchets (3) en gaz de fumée chauds (5) qui sont refroidis dans un générateur de vapeur (7) pour la production de vapeur (9), à partir duquel de l'énergie électrique est générée au moyen d'un cycle binaire.

4. Procédé d'incinération des déchets (20) selon la revendication 3, **caractérisé en ce que** les gaz de fumée refroidis (10) sont purifiés et déshydratés dans un système de purification (11) des gaz de fumée avec un épurateur à condensation par addition de produits chimiques (12).

5. Procédé d'incinération des déchets (20) selon la revendication 4, **caractérisé en ce que** les gaz de fumée (24) qui ont été refroidis, purifiés et déshydratés sont recyclés en partie en direction de l'incinérateur (21).

6. Procédé d'incinération des déchets selon la revendication 1, **caractérisé en ce que** le dispositif d'électrolyse (27) utilise de l'énergie renouvelable (29), comme par exemple de l'énergie solaire et/ou de l'énergie éolienne ; dans lequel l'oxygène pur, nécessaire pour le procédé d'incinération, est alimenté à l'incinérateur, et l'hydrogène obtenu (30) est vendu sous la forme d'un gaz industriel.

7. Procédé d'incinération des déchets selon l'une quelconque des revendications précédentes, **caractérisé en ce que** des produits organiques sont formés dans le dispositif de synthèse (32).

8. Procédé d'incinération des déchets selon la revendication 7, **caractérisé en ce que** le produit organique obtenu est du méthanol ; dans lequel le méthanol que l'on obtient peut être utilisé à la fois comme biométhanol et comme matière première chimique pour l'industrie chimique.

9. Dispositif destiné à la mise en oeuvre du procédé d'incinération des déchets que l'on décrit à la revendication 1, dans lequel le dispositif comprend un incinérateur (21) qui comprend une alimentation pour les déchets qui doivent être incinérés (3), une alimentation pour un mélange (22) d'oxygène pur (23) et de gaz de fumée (24) qui ont été recyclés, purifiés et déshydratés, et une évacuation pour les cendres résiduelles (6) et une évacuation pour des gaz de fumée chauds (5) ; et dans lequel le dispositif comprend également un dispositif d'électrolyse (27) qui est configuré pour séparer l'eau (28), qui a été récupérée à partir de l'installation de purification des gaz de fumée, en oxygène pur (26) et en hydrogène pur (30) ; dans lequel l'oxygène pur (26) est dirigé en direction de l'incinérateur (21) après avoir été mélangé avec des gaz de fumée (24) qui ont été recyclés, purifiés et déshydratés, afin de maintenir l'incinération ; dans lequel le dispositif comprend également un dispositif de synthèse (32) auquel on alimente de l'hydrogène pur (30) qui provient du dispositif d'électrolyse (27), et on fait réagir les gaz de fumée (24) qui ont été recyclés, purifiés et déshydratés, ce qui permet d'obtenir des produits réactionnels.

10. Dispositif selon la revendication 9, dans lequel l'évacuation pour les gaz de fumée chauds (5) est reliée à une alimentation d'un générateur de vapeur (7) qui est configuré pour refroidir avec de l'eau (8) les gaz de fumée chauds, ce qui permet d'obtenir de la vapeur (9), et pour les évacuer sous la forme de gaz de fumée (10) qui ont été refroidis ; dans lequel le dispositif est configuré pour transformer la vapeur obtenue en énergie électrique dans un cycle binaire.

11. Dispositif selon la revendication 10, dans lequel l'évacuation pour les gaz de fumée refroidis (10) est reliée à l'alimentation d'une installation de purification des gaz de fumée (11) qui comprend un épurateur à condensation, dans lequel des produits chimiques (12) sont ajoutés aux gaz de fumée refroidis (11) et des gaz de fumée refroidis sont purifiés pour devenir des gaz de fumée (24) qui ont été purifiés et déshydratés qui sont guidés en direction d'une évacuation.

12. Dispositif selon la revendication 11, dans lequel l'évacuation évacue en partie dans l'atmosphère les gaz de fumée (24) qui ont été purifiés et déshydratés, et les recycle en partie par l'intermédiaire d'une alimentation de cette partie en retour dans l'incinérateur (21) et, après l'addition par mélange d'oxygène pur (23), par l'introduction de ce dernier dans l'incinérateur (21) afin de maintenir l'incinération dans l'incinérateur.

13. Dispositif selon l'une quelconque des revendications 9 à 12, dans lequel le dispositif de synthèse (32) est un dispositif de synthèse de méthanol qui produit du méthanol.
